Europäisches Patentamt

European Patent Office

Office européen des brevets

(11) Numéro de publication: **0 075 511**
A2

# (12) DEMANDE DE BREVET EUROPEEN

(21) Numéro de dépôt: 82401666.1

(22) Date de dépôt: 14.09.82

(51) Int. Cl.³: **B 62 D 5/10**

(30) Priorité: **23.09.81 ES 506439**

(43) Date de publication de la demande: **30.03.83**
**Bulletin 83/13**

(84) Etats contractants désignés: **DE FR GB IT**

(71) Demandeur: **BENDIBERICA S.A., Balmès 243, Barcelona 6 (ES)**

(72) Inventeur: **Bacardit, Juan Simon, Calle Mallorca 451, Barcelona 13 (ES)**

(74) Mandataire: **Le Moenner, Gabriel et al, SERVICE BREVETS BENDIX 44, Rue François 1er, F-75008 Paris (FR)**

(54) Mécanisme d'actionnement à assistance par fluide, notamment pour système de servo-direction.

(57) L'organe de sortie d'un distributeur à fluide (6) forme l'organe d'entrée (4) à pignon (24) d'une transmission multiplicatrice logée dans un boîtier (1) et dont l'organe de sortie (5) comprend une barre courbe (121) portant un secteur denté (23) coopérant avec le pignon (24) et formant la tige courbe (21) d'un piston (19) se déplaçant dans un cylindre toroïdal (13) d'axe de courbure confondu avec l'axe (14) de l'arbre de sortie (3) du mécanisme relié à la tige du piston (21) par un bras de liaison (22) oscillant dans la chambre interne (10) du boîtier (1) formant l'une des chambres de travail du moteur à fluide d'assistance de la transmission.

0075511

1

Mécanisme d'actionnement à assistance par fluide,
notamment pour système de servo-direction

La présente invention concerne les mécanismes d'actionnement à
assistance par fluide, typiquement pour mécanismes de servo-direction de
véhicules automobiles, du type comprenant un organe de sortie destiné à
être relié à un système mené à actionner et un organe d'entrée destiné à
être relié à un système de commande d'actionnement par l'intermédiaire
d'un accouplement à course morte et d'un distributeur à fluide utilisant
cette course morte pour alimenter sélectivement les chambres de travail
d'un moteur à fluide à double effet réalisant ladite assistance.

Des agencements connus de ce type de mécanisme d'actionnement
mettent en oeuvre un groupe fonctionnel comprenant:un boîtier de direction,
le mécanisme d'actionnement à transmission multiplicatrice, et le distributeur hydraulique commandant le fonctionnement du mécanisme d'actionnement. Un exemple typique de ce type d'agencement est décrit par exemple
dans le brevet US 2 410 049 ou dans le brevet français 2 364 802 au nom
de la demanderesse et comporte, dans un boîtier de servo-direction, un
organe d'entrée de transmission formant vis coopérant, par l'intermédiaire
de chemins de roulements à billes, avec un mécanisme de sortie réalisé sous
la forme d'un écrou coaxial à la vis et au distributeur, l'écrou, à déplacement linéaire, formant le piston du moteur d'assistance, et comportant des
dents de crémaillère engrenant avec un organe de sortie de transmission sous
la forme d'un secteur denté solidaire de l'arbre de sortie du mécanisme.

Dans ces techniques connues, il se pose des problèmes d'adaptation
in situ du groupe fonctionnel, tant pour des raisons d'encombrement que
pour ce qui est des dispositions respectives de l'organe d'entrée et de
l'organe de sortie.

La présente invention a précisément pour objet de proposer un mécanisme d'actionnement à assistance par fluide du type défini ci-dessus,
d'encombrement réduit, mettant en oeuvre un nombre également réduit d'éléments, avec une inertie mécanique et opérationnelle minima, et offrant une
grande versatilité vis-à-vis des dispositions respectives des organes
d'entrée et de sortie du mécanisme.

Pour ce faire, selon une caractéristique de l'invention, l'organe
de sortie coopère avec l'organe d'entrée de façon à être mû dans son ensemble par ce dernier en rotation autour d'un axe, le moteur à fluide comprenant un cylindre en forme de secteur toroïdal coaxial audit axe et dans

2

lequel se déplace à coulissement étanche un piston couplé à l'organe de sortie.

Selon une autre caractéristique de l'invention, l'organe de sortie coopère directement en engrènement avec l'organe d'entrée, l'organe de sortie comportant typiquement un secteur denté coaxial audit axe et coopérant en engrènement avec un pignon de l'organe d'entrée.

Selon une caractéristique plus particulière de l'invention, l'organe de sortie forme tige courbe pour le piston du moteur.

Selon une autre caractéristique de l'invention, le cylindre de moteur fait partie d'un boîtier étanche renfermant la transmission et formant au moins une des chambres de travail du moteur.

Avec un tel agencement, l'organe de sortie de la transmission est mû par l'organe d'entrée dans un mouvement de rotation autour d'un axe coïncidant typiquement avec l'arbre de sortie du mécanisme d'actionnement, tandis que l'organe de sortie de la transmission joue simultanément le rôle de la tige de piston qui se déplace également suivant un trajet courbe coaxial audit axe, dans un agencement général compact et à faibles pertes mécaniques. De plus, l'engrènement entre le pignon de l'organe d'entrée et le secteur denté de l'organe de sortie peut s'effectuer de diverses manières, par exemple à angle droit, parallèlement ou avec un angle aigu dans un mode d'engrènement à secteur denté et pignon cônique.

D'autres caractéristiques et avantages de la présente invention ressortiront de la description suivante de modes de réalisation, donnés à titre illustratif mais nullement limitatif, faite en relation avec les dessins annexés, sur lesquels :

- la figure 1 est une vue en coupe transversale d'un premier mode de réalisation du mécanisme d'actionnement selon l'invention ;

- la figure 2 est une vue schématique, partiellement en coupe, suivant la ligne II-II de la figure 1 ;

- la figure 3 est une vue en coupe partielle suivant la ligne courbe III-III de la figure 1 ;

- la figure 4 est une coupe transversale du cylindre d'assistance suivant la ligne IV-IV de la figure 1 ;

- la figure 5 est une vue analogue à la figure 1 d'un autre mode de réalisation de l'invention ; et

- la figure 6 est une vue en coupe suivant la ligne VI-VI de la figure 5.

Dans la description qui va suivre et sur les dessins, les éléments

3

identiques ou analogues portent les mêmes chiffres de référence, éventuellement affectés d'un digit des centaines supplémentaire pour le second mode de réalisation.

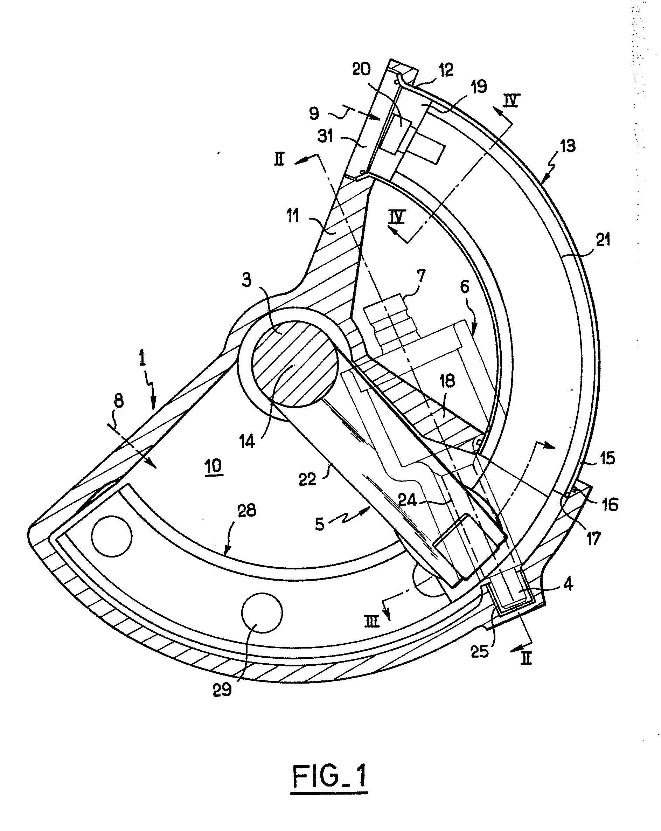

Dans le mode de réalisation des figures 1 à 4, le mécanisme comprend essentiellement un boîtier creux en forme de secteur 1, dans lequel tourillone au moyen de roulements 2 un arbre de sortie 3 destiné typiquement à être couplé à un mécanisme de direction des roues d'un véhicule automobile, une transmission multiplicatrice d'effort comprenant un organe d'entrée 4 et un organe de sortie 5, et un distributeur à fluide 6 interposé entre l'organe d'entrée de transmission 4 et un organe de commande 7 du mécanisme, relié typiquement à un volant de direction, par l'intermédiaire d'un accouplement à course morte pour fournir sélectivement dans des conduites de sortie 8 et 9 un fluide sous pression acheminé vers les chambres de travail respectives d'un moteur à fluide d'assistance.

De façon générale, le distributeur 6 est un distributeur hydraulique connu en soi, du type coaxial à rotor tubulaire et douille ou du type à rotor en étoile, assurant lui-même la liaison mécanique à course morte entre l'organe de commande d'entrée 7 et l'organe d'entrée 4 de la transmission qui constitue en fait l'organe de sortie du distributeur 6.

Comme on le voit bien sur la figure 1, le boîtier plat en forme de secteur 1 définit une chambre interne en forme de secteur 10 à laquelle est reliée la canalisation de sortie de fluide de travail 8 du distributeur 6. Le boîtier 1 comporte en outre un bras radial 11 sur lequel est fixé hermétiquement une extrémité 12 d'un tube courbe 13 dont le centre de courbure est confondu avec l'axe 14 de l'arbre 3 et du secteur du boîtier. L'autre extrémité 15 du tube courbe est reçue en emmanchement étanche, au moyen de joints 16, dans une ouverture 17 formée dans la paroi adjacente 18 du boîtier 1. Dans le cylindre de vérin courbe constitué par le tube 13 se déplace à coulissement étanche un piston annulaire 19 fixé par une vis 20 à une barre courbe 21 ayant son centre de courbure confondu avec l'axe 14 et formant la tige du piston 19. Dans la position extreme représentée sur la figure 1, la barre courbe 21 s'étend tout au long du cylindre 13 pour se prolonger à l'intérieur de la chambre 10 du boîtier 1, l'extrémité intérieure de la barre 21 étant reliée à une extrémité d'un bras oscillant 22 rendu solidaire de l'arbre de sortie 3 et se débattant angulairement à l'intérieur de la chambre sectorielle 10 du boîtier 1.

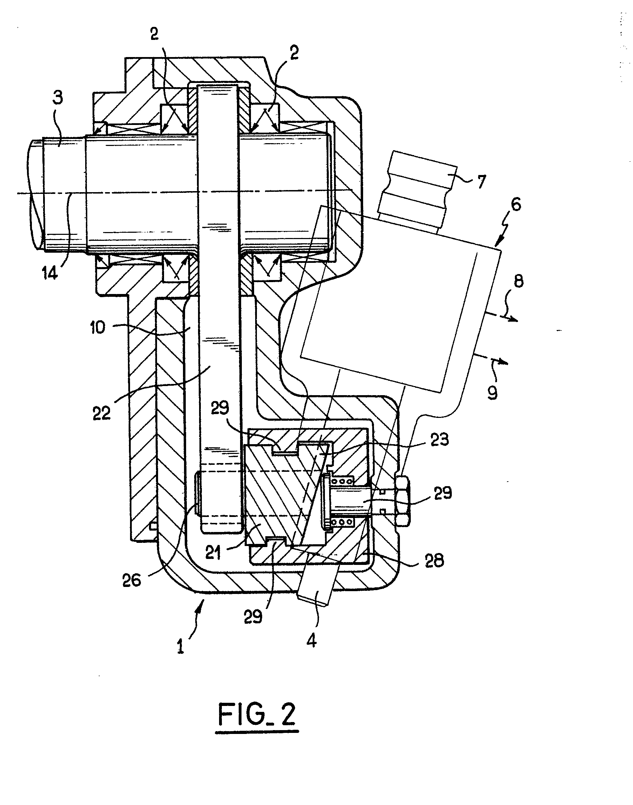

Comme on le voit mieux sur les figures 2 à 4, la barre courbe 21, de section généralement trapézoïdale, présente sur une de ses faces un secteur denté 23 coopérant avec un pignon 24/sur l'organe d'entrée 4 de la transmission. Dans l'exemple représenté, le distributeur 6 est monté sur une des faces du boîtier 1 de façon à ce que son axe longitudinal fasse un angle aigu avec le plan général de débattement du bras oscillant 22 (comme on le voit bien sur la Figure 2), l'extrémité de l'organe d'entrée 4 de la transmission tourillonnant dans un palier 25 formé dans le boîtier 1. Dans ce cas, le secteur denté 23 se présente sous la forme d'un secteur denté cônique formé sur la face de la barre courbe 21 dirigée du côté du distributeur 6, la barre courbe 21 étant reliée, par sa face opposée, au bras oscillant 22. Dans le mode de réalisation représenté, l'extrémité intérieure de la barre courbe 21 est reliée de façon articulée à l'extrémité extérieure du bras oscillant 22 par un élément d'axe 26 reçu dans un alésage 27 de la barre courbe 21.

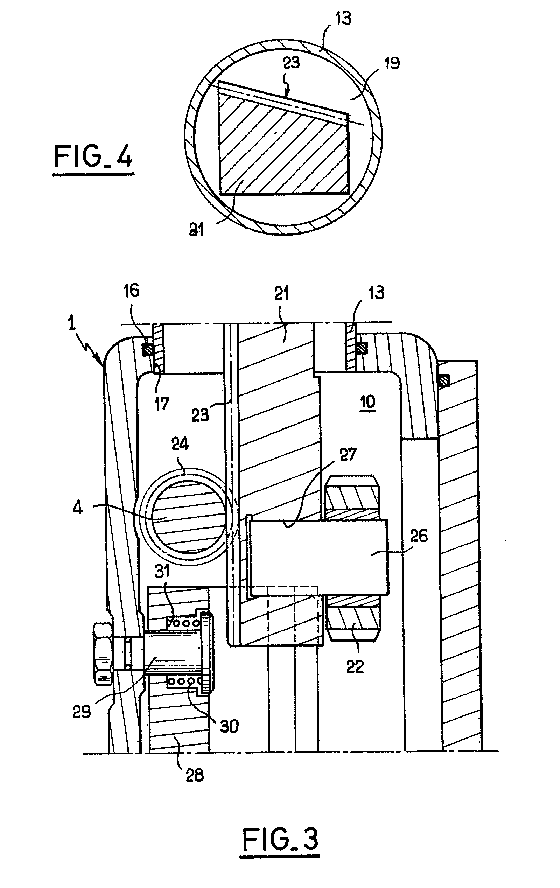

Comme on le voit bien sur les figures 2 et 3, la barre courbe 21 est guidée, dans son déplacement circulaire, par un guide courbe 28 s'étendant dans la chambre 10 du boîtier 1 et monté sur la paroi latérale de ce dernier, le guide 28 comportant des saillies en vis à vis 29 reçues dans des gorges correspondantes de la barre courbe 21. De préférence, pour permettre un réglage de l'engrènement entre le secteur denté 23 de la barre courbe 21 et le pignon 24 de l'organe d'entrée 4, le guide 28 est monté de façon réglable sur la paroi du boîtier 1 au moyen de boulons à ressort 29, les ressorts 30 s'étendant entre une tête interne de chaque boulon 29 et un épaulement 31 du guide 28.

L'extrémité extérieure 12 du tube 13 est fixée avantageusement sur le bras 11 par un bouchon 31 dans lequel débouche la canalisation 9 provenant du distributeur 6, l'autre conduite du distributeur 6 débouchant dans la chambre 10 du boîtier 1. De cette façon, en fonction de la rotation de l'organe de commande d'entrée 7 du distributeur 6, ce dernier envoie sélectivement du fluide sous pression en provenance d'une source de pression par l'une ou l'autre des canalisations 8 ou 9 vers l'une ou l'autre des chambres du moteur hydraulique formées par le piston 19 dans le cylindre 13, à savoir du côté du piston 19 dirigé vers le bouchon 31 ou dans la chambre 10 formée par le boîtier 1. En fonction de la différence de pression ainsi créée de part et d'autre du piston 19, celui-ci se déplace dans un trajet courbe le long du cylindre 13, déplaçant avec lui ladite tige courbe 21 et faisant osciller le bras 22 autour de l'axe 14, assistant ainsi la transmission mécanique entre l'organe d'entrée 4 et l'organe de sortie 5 qui regroupe, en l'occurrence, la barre courbe dentée 21, le bras oscillant 22 et l'arbre de sortie 3.

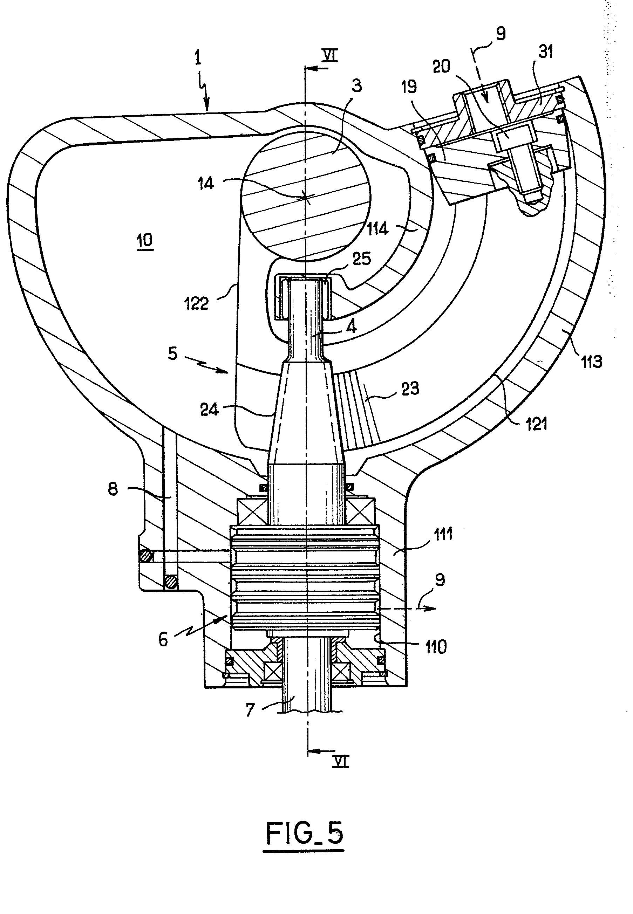

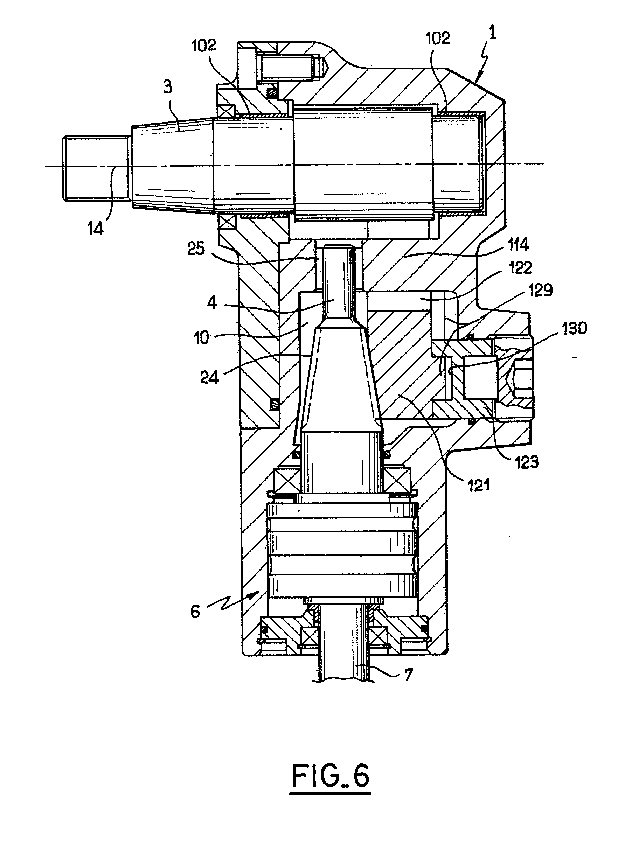

Le mode de réalisation des Figures 5 et 6 se distingue essentiellement du mode de réalisation précédemment décrit en ce sens que le cylindre courbe dans lequel se déplace le piston 19 est formé par une extension 113 du boîtier 1. La paroi intérieure 114 du cylindre 113 séparant ce dernier de la chambre interne 10 du boîtier 1 forme en même temps le palier 25 pour l'organe d'entrée 4 de la transmission multiplicatrice, c'est-à-dire l'organe tournant de sortie du distributeur hydraulique 6, analogue au précédent mais reçu, cette fois, dans un alésage 110 formé dans une portion cylindrique 111 du boîtier 1, l'axe du distributeur 6 passant par l'axe de rotation 14 de l'organe de sortie 5 de la transmission. Dans ce mode de réalisation, la barre courbe 121, formant la tige du piston 19 et pourvue du secteur denté 23 coopérant avec le pignon 24 de l'organe d'entrée 4 de la transmission, est formé avantageusement d'une seule pièce avec le bras pivotant 122 lui-même solidarisé à l'arbre de sortie 3 du mécanisme qui tourillonne dans le boîtier 1 au moyen de coussinets 102. De ce fait, le guidage dans son déplacement curviligne de la barre courbe 121 est effectué localement, au niveau de la zone d'engrènement entre le secteur denté 23 et le pignon 24, par un guide 123 monté sur la paroi du boîtier et comprenant une gorge arquée 130 ouvrant dans la direction du pignon 24 et recevant une saillie 129 formée sur la face de la barre courbe 122 opposée au secteur denté 23. Comme précédemment, la chambre du cylindre 113 opposée à la chambre interne 10 est fermée par un bouchon 31 auquel se raccorde la canalisation de distribution de fluide de travail 9 du distributeur. Sur la Figure 5, on remarquera, dans ce mode de réalisation, l'autre canalisation de distribution de fluide de travail 8, alimentant la chambre interne 10 du boîtier 1, formée directement dans ce dernier. Dans l'exemple représenté, l'axe du distributeur 6, et donc de l'organe d'entrée 4 de la transmission, est parallèle au plan général de débattement du bras oscillant 122, le pignon d'attaque 24 étant conique.

Quoique la présente invention ait été décrite en relation avec des modes de réalisation particuliers, elle ne s'en trouve pas limitée mais est au contraire susceptible de modifications et de variantes qui apparaîtront à l'homme de l'art.

REVENDICATIONS

1. Mécanisme d'actionnement à assistance par fluide, comprenant une transmission multiplicatrice d'effort comportant un organe de sortie (5) destiné à être relié (via un arbre 3) à un système mené à actionner, et un organe d'entrée (4) destiné à être relié à un système de commande d'actionnement (7) par l'intermédiaire d'un accouplement à course morte et d'un distributeur à fluide (6) utilisant cette course morte pour alimenter sélectivement les chambres de travail d'un moteur à fluide à double effet (19;13,113) réalisant ladite assistance, caractérisé en ce que l'organe de sortie (5,23) coopère avec l'organe d'entrée (4,24) de façon à tourner dans son ensemble autour d'un axe (14), le moteur à fluide comprenant un cylindre (13;113) en forme de secteur toroïdal, coaxial audit axe (14), dans lequel se déplace à coulissement étanche un piston (19) couplé à l'organe de sortie (5).

2. Mécanisme selon la revendication 1, caractérisé en ce que l'organe de sortie (5,23) coopère directement en engrènement avec l'organe d'entrée (4,24).

3. Mécanisme selon la revendication 2, caractérisé en ce que l'organe de sortie (5) comporte un secteur denté (23) coaxial audit axe (14) et coopérant en engrènement avec un pignon (24) de l'organe d'entrée (4).

4. Mécanisme selon l'une des revendications 1 à 3, caractérisé en ce que l'organe de sortie (5) forme une tige courbe (121) pour le piston (19) du moteur.

5. Mécanisme selon la revendication 4, caractérisé en ce que l'organe de sortie (5) comprend une partie de bras courbe (121) formant ladite tige de piston et une partie de bras de liaison oscillant (22; 122) reliée à un arbre de sortie (3) du mécanisme coaxial audit axe (14).

6. Mécanisme selon l'une des revendications 3 à 5, caractérisé en ce que le secteur denté (23) est ménagé sur la partie courbe formant tige de piston (21;121).

7. Mécanisme selon l'une des revendications 1 à 6, caractérisé en ce que le cylindre de moteur (13;113) fait partie d'un boîtier étanche en forme de secteur (1) renfermant la transmission (4,5) et formant au moins une (10) des chambres de travail du moteur.

8. Mécanisme selon la revendication 7, caractérisé en ce que le cylindre toroïdal du moteur est constitué d'un tube courbe (13) ayant une (15) de ses extrémités montée hermétiquement dans une extrémité (18) du boîtier (1).

9. Mécanisme selon la revendication 8, caractérisé en ce que l'extrémité opposée (12) du tube (13) est fixée à un support en saillie (11) du boîtier (1).

10. Mécanisme selon l'une des revendications 6 à 9, caractérisé en ce que le secteur denté (23) est monté à coulissement sur un guide (28; 128) monté sur la paroi latérale du boîtier (1) du côté du secteur opposé au pignon (24) de l'organe d'entrée (4).

## FIG_1

FIG_2

FIG. 4

FIG. 3

0075511

FIG_5

FIG. 6